# EUROPEAN PATENT SPECIFICATION

(11) **EP 2 892 268 B1**
(45) Date of publication and mention of the grant of the patent: **21.03.2018**
(21) Application number: 12886417.0
(22) Date of filing: 12.10.2012
(51) Int. Cl.: H04B 7/04, H04B 7/0408, H04B 7/0491, H04B 7/0495, H04B 7/06, H01Q 3/24, H04W 16/28

(54) **METHOD, APPARATUS AND BASE STATION FOR IMPROVING USER CAPACITY IN PHYSICAL SECTOR**
VERFAHREN, VORRICHTUNG UND BASISSTATION ZUR VERBESSERUNG DER BENUTZERKAPAZITÄT AUF DEM PHYSIKALISCHEN SEKTOR
PROCÉDÉ, APPAREIL ET STATION DE BASE PERMETTANT D'AMÉLIORER LA CAPACITÉ D'UTILISATEUR DANS UN SECTEUR PHYSIQUE

(43) Date of publication of application: 08.07.2015
(73) Proprietor: Huawei Technologies Co., Ltd., Longgang District Shenzhen, Guangdong 518129 (CN)
(72) Inventor: YANG, Jing, Shenzhen Guangdong 518129 (CN); SHEN, Lele, Shenzhen Guangdong 518129 (CN)
(74) Representative: Pfenning, Meinig & Partner mbB
(86) International application number: PCT/CN2012/082876
(87) International publication number: WO 2014/056197

(56) References cited:
- EP-A1- 1 865 626
- EP-A1- 1 988 737
- EP-A2- 1 458 205
- WO-A1-2006/004462
- CN-A- 1 376 364
- CN-A- 101 171 770
- CN-A- 102 439 867
- CN-A- 102 724 682

## Description

### TECHNICAL FIELD

The present invention relates to communications technologies, and in particular, to a method and an apparatus for increasing user capacity of a physical sector, and a base station.

### BACKGROUND

A wireless communications system mainly includes a BS (Base Station, base station) and a UE (User Equipment, user equipment), where one BS may communicate with multiple UEs in a coverage range of the BS. A signal that a BS sends to a UE is referred to as a downlink signal, and a signal that a UE sends to a BS is referred to as an uplink signal. Each radio transceiver of a BS has a specific coverage range, and if a UE is beyond the coverage range of the radio transceiver, communication of the UE will be interrupted. Therefore, each BS has a limited coverage range. Multiple BSs are associated according to a specific rule to form a wireless communications network with a relatively wide coverage range. In a situation in which frequency resources are limited, many BSs will use a same frequency resource, which brings about more co-channel interference.

At present, co-channel interference suppression is usually implemented by using sector antennas (that is, directional antennas), that is, a coverage range of a BS is divided into several physical sectors by using several directional antennas, where each directional antenna covers a specific physical sector, and a coverage range of each physical sector is referred to as a cell, where the cell receives interference from only some cells of intra-frequency cells. By using a directional antenna, co-channel interference is reduced, a multiplexing ratio of frequency resources is increased, and system capacity is increased. Generally, a cell may be divided into three physical sectors or six physical sectors, or be divided into more physical sectors.

At present, a networking mode using three physical sectors is still a mainstream networking mode of LTE (Long Term Evolution, long term evolution) systems. However, as the amount of cell services increases, in a situation in which no base station is added, a networking mode using six or even more physical sectors becomes a preferable solution to increase cell coverage and capacity.

In an existing wireless communications system, a typical networking solution is to divide each BS into several physical sectors by using sector directional antennas, and then MIMO (Multi-input Multi-output, multi-input multi-output) technology is used for communication between the BS and UEs in each physical sector. For example, if L directional antennas are disposed in an entire BS, where the L directional antennas point to K directions, so that an entire cell is divided into K sectors, and each sector has N antennas (N=L/K). An existing emulation result shows that, in a situation in which the total number of antennas is the same, compared with downlink capacity of three physical sectors, downlink capacity of six physical sectors is increased considerably.

In a process of implementing the present invention, it is found that at least the following problem exists in the prior art:
In a densely populated urban scene, the existing physical sector capacity cannot meet a user requirement, so that a networking solution where a cell is divided into more sectors needs to be used to increase system capacity. However, as the number of physical sectors increases, a user terminal needs to be handed over between cells frequently, so as to cause problems such as call drop and decline of a transmission rate, and affect user experience; in addition, as the number of sectors increases, a proportion of users located in an overlapping area of physical sectors increases, and these users receive strong interference, which causes a capacity drop.

In conclusion, at present, a technical solution is needed urgently to increase user capacity of a base station without the need to add a physical sector.

EP1865626A1 discloses a transmission device able to improve signal quality in a downlink channel, wherein the transmission device includes a unit for transmitting the data channel by using a multi-beam or a variable directional beam, and a unit for transmitting a known signal as the pilot channel by using the multi-beam or the variable directional beam. The multi-beam includes plural fixed directional beams having respective fixed directions different from each other, and the variable directional beam is of a direction changing along with a position of a mobile terminal.

EP1988737A1 provides a method is provided for dynamically allocating transmission resources to different subscriber devices. The method comprises the steps of: providing at least one base station comprising at least one antenna array; providing one or more sectors associated with that wireless communications network; dynamically dividing one or more of the sectors into a plurality of virtual sub-sectors, each allowing communications between the base station and at least one respective subscriber; from among the plurality of the virtual sub-sectors, selecting at least one pair of subscriber devices wherein each of the pair of subscriber devices is not interfered substantially by transmissions directed to the other subscriber of that pair; for each of the divided sectors, generating plurality of time frequency allocation maps; transmitting the generated maps to all virtual sub-sectors associated with the respective sector; and for each of the sectors, beamforming the transmissions to be conveyed to the subscriber devices' pairs, summing them and conveying the summed result towards the array antenna.

### SUMMARY

An objective of embodiments of the present invention is to provide a method for increasing user capacity of a physical sector, so as to increase user capacity of a base station on a premise that no physical sector is added to the base station.

According to one aspect, a method for increasing user capacity of a physical sector is provided and includes:
determining a correspondence between a current user terminal in a physical sector and a belonging beam area or an intersection area, where more than one beam in different directions is included in the physical sector, the intersection area is an overlapping coverage area of adjacent beams in a same physical sector, and the belonging beam area is an area that is in a coverage area of each beam and is not in an intersection area;
sending, jointly by all beams in the physical sector, common pilot data;
sending, jointly by all beams that are corresponding to an intersection area in which the user terminal is located, communication data to the user terminal; and multiplexing a same block of time-frequency resource for user terminals located in different belonging beam areas; and
performing switching between beams when the user terminal switches between the belonging beam area and the intersection area.

Further, that more than one beam in different directions is included in each physical sector is specifically that:
the number of beams is two.

Further, the determining a correspondence between a current user terminal in a physical sector and a belonging beam area or an intersection area includes:
determining, by measuring an uplink sounding reference signal of the user terminal in the physical sector, a belonging beam area or an intersection area corresponding to the user terminal.

Further, the multiplexing a same block of time-frequency resource for user terminals located in different belonging beam areas includes:
multiplexing different layers of the time-frequency resource for the user terminals belonging to different belonging beam areas.

Further, the sending, jointly by all beams that are corresponding to an intersection area in which the user terminal is located, communication data to the user terminal includes:
sending the communication data jointly in an antenna joint sending manner.

Further, the sending the communication data jointly in an antenna joint sending manner is sending the communication data in the same manner as sending the common pilot data.

According to another aspect, an apparatus for increasing user capacity of a physical sector is further provided and includes:
a determining unit, configured to control, according to a communication status between a base station and a user terminal, each unit to perform a corresponding operation, wherein the communication status comprises: before communication data is sent to the user terminal, at the time when communication data is being sent to the user terminal, and belonging beam area at the time when the user terminal switches between a belonging beam area and an intersection area;
a user terminal correspondence unit, configured to, before communication data is sent to the user terminal, determine a correspondence between a current user terminal in a physical sector and a belonging beam area or an intersection area, wherein more than one beam in different directions is provided in the physical sector, and the intersection area is an overlapping coverage area of adjacent beams in a same physical sector, wherein the belonging beam area is an area that is in a coverage area of each beam and is not in an intersection area;
a data transmission unit, configured to be used by all beams in the physical sector to send common pilot data jointly; and be used by all beams corresponding to an intersection area in which the user terminal is located, to send communication data jointly to the user terminal;
a time-frequency resource multiplexing unit, configured to, when communication data is being sent to the user terminal, multiplex a same block of time-frequency resource for user terminals located in different belonging beam areas; and
a beam switching unit, configured to perform switching between beams when the user terminal switches between the belonging beam area and the intersection area.

According to still another aspect, a base station is further provided and includes an apparatus for increasing user capacity of a physical sector.

In the embodiments of the present invention, more than one beam in different directions is provided in each physical sector and an area covered by the multiple beams is divided; then data transmission is performed with a base station in different manners according to different positions of a current user terminal; then a same block of time-frequency resource is multiplexed for user terminals located in different belonging beam areas, so as to increase user capacity of the base station. In addition, in a moving process of a user terminal located in a same physical sector, when switching between an intersection area and a belonging beam area is performed, data transmission between the user terminal and the base station can be held by means of beam switching. This is unlike technical solutions in the prior art in which, after a physical sector is added for a purpose of increasing user capacity, a moving user terminal needs to perform cell handover, and therefore, problems such as call drop and decline of a transmission rate due to frequent cell handover no longer exist.

### BRIEF DESCRIPTION OF DRAWINGS

FIG. 1 is a flowchart of a method for increasing user capacity of a physical sector according to an embodiment of the present invention;
FIG. 2 is a schematic diagram of coverage ranges of beams in an antenna group used in a method for increasing user capacity of a physical sector according to an embodiment of the present invention;
FIG. 3 is a schematic diagram of a coverage range of a single physical sector in an antenna group used in a method for increasing user capacity of a physical sector according to an embodiment of the present invention; and
FIG. 4 is a schematic structural diagram of an apparatus for increasing user capacity of a physical sector according to an embodiment of the present invention.

### DESCRIPTION OF EMBODIMENTS

To make the objectives, features, and advantages of the present invention more comprehensible, the following further describes in detail the embodiments of the present invention with reference to the accompanying drawings and specific implementations.

A beam refers to an area covered in space by electromagnetic waves that are transmitted by an antenna.

A shape of an area covered by a beam is determined by a transmit antenna. Beams mentioned in embodiments of the present invention refer to several narrow beams, in different directions, that are formed by using a fixed beamforming method on multiple co-polarized antennas. In one aspect, a method for increasing user capacity of a physical sector is provided, a core technical solution of which is as follows: Multiple beams formed by different directions of antennas in an antenna group are included within each physical sector, and first, it is determined that a current user terminal belongs to a beam or is located in an overlapping area of beams; then, when the user terminal in the physical sector switches between a beam and an overlapping area of beams, communication of the user terminal is ensured by means of beam switching. In this embodiment, user capacity of a base station is increased by multiplexing a same block of time-frequency resource for user terminals located in different beams within the physical sector; in addition, cell handover is unnecessary when the user terminal in the physical sector switches between different beams. Therefore, not only the user capacity of the base station is increased, but also problems such as call drop and decline of a transmission rate of the user terminal are reduced effectively, thereby improving user experience.

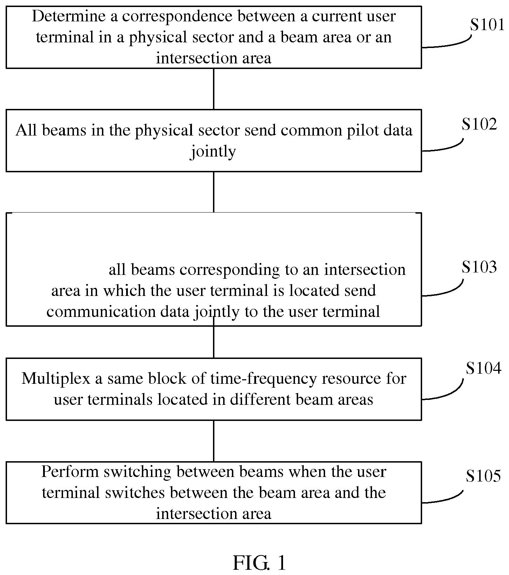

As shown in FIG. 1, a method for increasing user capacity of a physical sector provided in an embodiment of the present invention may include the following steps:
S101. Determine a correspondence between a current user terminal in a physical sector and a belonging beam area or an intersection area, where more than one beam in different directions is included in the physical sector, the intersection area is an overlapping coverage area of different beams in a same physical sector, and the belonging beam area is an area that is in a coverage area of each beam and is not in an intersection area.

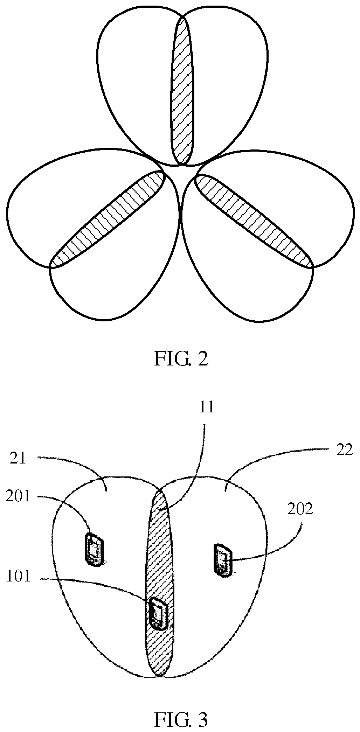

As shown in FIG. 2, in this embodiment of the present invention, a base station may include three physical sectors. FIG. 3 shows a signal coverage range, that is, a physical sector, of each antenna group in the base station; and two beams may be included in each physical sector.

The antenna group in each physical sector may form two narrow beams by using a beamforming technology, and AAS (active Antenna System, active antenna system) antennas may further be used directly to make a main lobe of each beam maintain a specific angle. For example, a base station includes three physical sectors, and each physical sector includes two beams. An angle of each beam may be 60 degrees, and after every two beams are combined to form a coverage range of a physical sector, the coverage range of each physical sector is 120 degrees. In this way, each base station can implement full-circle coverage of 360 degrees.

Certainly, in this embodiment, the number of beams in each physical sector in the base station may also be another number, which is not limited herein; for example, the base station may also be divided into three physical sectors, and each physical sector includes three beams.

As shown in FIG. 3, in each physical sector, positions of user terminals may be classified into two types, where the first type is a coverage area in which different beams intersect and which may be referred to as an intersection area 11, and the intersection area is a shaded part in the figure; and the other type is a coverage area corresponding to each beam except an intersection area, where the area is referred to as a belonging beam area, and two belonging beam areas, belonging beam area 21 and belonging beam area 22 are included in the figure.

Specifically, when a correspondence between a user terminal and a beam is being determined, a beam corresponding to the user terminal may be determined by measuring an uplink sounding reference signal, that is, an uplink sounding signal, of the user terminal in the physical sector.

The base station receives response signals returned by each user terminal, and response powers of the user terminal for different antenna groups may be reflected by the response signals of the user terminal, so that it can be determined that an antenna group for which the user terminal has a relatively high response power is a beam to which the antenna group corresponding to the user terminal belongs. A corresponding beam of each user terminal may be determined in this manner; specifically, in this embodiment of the present invention, the response signal may be an uplink sounding reference signal.

In this embodiment of the present invention, the base station acquires and calculates response powers for each antenna group. When a power difference of the response powers of the user terminal for different antenna groups is greater than a set value, it can be considered that the user terminal is located in a belonging beam area of a beam corresponding to an antenna group with a relatively high power.

When the power difference of the response powers of the user terminal for different antenna groups is less than the set value, it can be considered that the user terminal is located in an intersection area formed by beams respectively corresponding to the different antenna groups.
S102. All beams in the physical sector send common pilot data jointly.

In a practical application, communication between a base station and a user terminal includes sending of common pilot data and sending of communication data.

A pilot signal is a known signal provided by a transmit end to a receive end for channel estimation or channel quality detection. Downlink pilot signals are classified into common pilot data and user terminal dedicated pilot data, where common pilot data is sent in a broadcast manner and used by all user terminals in a cell for downlink channel quality measurement, channel estimation, cell searching, and the like; user terminal dedicated pilot data and communication data of the user terminal are sent together to support dynamic beamforming and the like.

In this embodiment of the present invention, when the base station is to send common pilot data, all beams in the physical sector send common pilot data jointly; specifically, common pilot data may be sent jointly in an antenna joint sending manner.
S103. A beam corresponding to a belonging beam area in which the user terminal is located sends communication data to the user terminal; or all beams corresponding to an intersection area in which the user terminal is located send communication data jointly to the user terminal.

Because the user terminal located in the belonging beam area has a corresponding beam, the beam may implement data communication between the user terminal and the base station, that is, the beam corresponding to the user terminal sends communication data to the user terminal. For example, in FIG. 3, a current position of user terminal 201 is in belonging beam area 21, and in this case, the base station sends communication data to user terminal 201 by using a beam of belonging beam area 21; a current position of user terminal 202 is in belonging beam area 22, and the base station sends communication data to user terminal 202 by using a beam of belonging beam area 22; when a current position of user terminal 101 is in intersection area 11, and in this case, the user terminal 101 and two beams of the formed intersection area 11 send communication data jointly. Specifically, the two beams of the formed intersection area 11 may send communication data to user terminal 101 in an antenna joint sending manner.

In a practical application, all beams that cover an intersection area send communication data jointly to a user terminal located in the intersection area, and the antenna joint sending manner used is the same as a sending manner of common pilot data.
S104. Multiplex a same block of time-frequency resource for user terminals located in different belonging beam areas.

In this embodiment of the present invention, a same block of time-frequency resource in each physical sector may be multiplexed for user terminals located in different belonging beam areas, so as to increase user capacity of the base station.

A specific manner of multiplexing a time-frequency resource may be as follows: It is assumed that user terminal 201 is located in belonging beam area 21 and user terminal 202 is located in belonging beam area 22; after the first layer of a time-frequency resource has been scheduled to user terminal 201 for use, the second layer of the time-frequency resource may further be scheduled to user terminal 202 for use. By multiplexing time-frequency resources, the user capacity of the base station can be increased effectively in this embodiment of the present invention. It should be noted that, in this embodiment of the present invention, when one layer of a time-frequency resource has been scheduled to a user terminal located in an intersection area, another layer of the time-frequency resource will be no more scheduled to another user terminal, that is, a time-frequency resource cannot be multiplexed for a user terminal located in an intersection area and another user terminal.
S105. Perform switching between beams when the user terminal switches between the belonging beam area and the intersection area.

In a practical application, a position of a user terminal is not necessarily unchanged, and the user terminal is likely to move from a belonging beam area to an intersection area because of a movement of a user who uses the user terminal. For example, in a process of the movement of the user, the user terminal is likely to move from belonging beam area 21 to intersection area 11, and may further be likely to move from intersection area 11 to belonging beam area 22. In this case, that is, when the user terminal switches between the belonging beam area and the intersection area, communication between the user terminal and the base station may be held by means of beam switching. Because cell handover is unnecessary in the beam switching manner, problems such as call drop or decline of communication quality are not caused. In this embodiment of the present invention, because in a same physical sector, a same block of time-frequency resource can be multiplexed for user terminals located in different belonging beam areas, user capacity of the physical sector can be increased effectively. In addition, compared with the prior art, a technical solution in this embodiment of the present invention increases user capacity without a need to increase the number of physical sectors, which avoid a defect in the prior art that user capacity is increased by increasing the number of physical sectors, that is, in the prior art, a moving user terminal will perform cell handover frequently, which causes problems such as frequent call drops and decline of a transmission rate of the user terminal during communication.

In another aspect, an embodiment of the present invention further provides an apparatus for increasing user capacity of a physical sector including:
A determining unit 1, configured to control, according to a current communication status between a base station and a user terminal 7, each unit to perform a corresponding operation, where the communication status includes: before communication data is sent to the user terminal 7, at the time when communication data is being sent to the user terminal 7, and at the time when the user terminal 7 switches between a belonging beam area and an intersection area.

A user terminal correspondence unit 2, configured to, before communication data is sent to the user terminal 7, determine a correspondence between the current user terminal 7 in a physical sector and a belonging beam area or an intersection area, where more than one beam in different directions is provided in the physical sector, the intersection area is an overlapping coverage area of different beams in a same physical sector, and the belonging beam area is an area that is in a coverage area of each beam and is not in an intersection area.

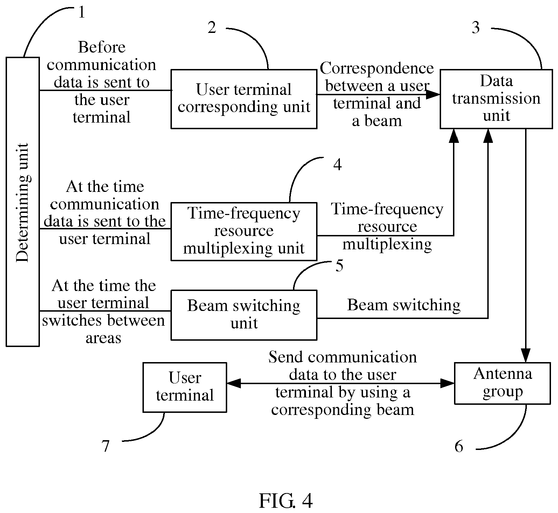

With reference to FIG. 4, FIG. 2, and FIG. 3, in this embodiment of the present invention, a base station may include three physical sectors, where a signal coverage range of each antenna group 6 in the base station is a physical sector, and two beams may be included in each physical sector.

The antenna group 6 in each physical sector may form two narrow beams by using a beamforming technology, and AAS antennas may further be used directly to make a main lobe of each beam maintain a specific angle. For example, a base station includes three physical sectors, and each physical sector includes two beams. An angle of each beam may be 60 degrees, and after every two beams are combined to form a coverage range of a physical sector, the coverage range of each physical sector is 120 degrees. In this way, each base station can implement full-circle coverage of 360 degrees.

Certainly, in this embodiment of the present invention, the number of beams in each physical sector in the base station may also be another number, which is not limited herein; for example, the base station may also be divided into three physical sectors, and each physical sector includes three beams.

In each physical sector, positions of the user terminal 7 may be classified into two types, where the first type is a coverage area in which different beams intersect and which may be referred to as an intersection area 11, and the intersection area is a shaded part in the figure; and the other type is a coverage area corresponding to each beam except an intersection area, and the area is referred to as a belonging beam area. Two belonging beam areas, belonging beam area 21 and belonging beam area 22, are included in the figure.

In a practical application, communication between a base station and a user terminal includes sending of common pilot data and sending of communication data. When common pilot data is being sent, the common pilot data is sent jointly in an antenna joint sending manner to both user terminals located in a belonging beam area and user terminals located in an intersection area. When communication data is being sent, the communication data needs to be sent in different manners. Specifically, a user terminal correspondence unit may determine a correspondence between a user terminal and a beam according to a current position of the user terminal. A specific manner is receiving response signals returned by each user terminal, where response powers of the user terminal for different antenna groups may be reflected by the response signals of the user terminal, so that it can be determined that an antenna group for which the user terminal has a relatively high response power is a beam to which the antenna group corresponding to the user terminal belongs. A corresponding beam of each user terminal may be determined in this manner.

Specifically, the user terminal correspondence unit may include an uplink sounding reference signal measuring module. Then, when a correspondence between a user terminal and a beam is being determined, the uplink sounding reference signal measuring module may determine a beam corresponding to a user terminal by measuring an uplink sounding reference signal of the user terminal in a physical sector; specifically, in this embodiment of the present invention, the response signal may be an uplink sounding reference signal.

In this embodiment of the present invention, the base station acquires and calculates response powers of the user terminal for antenna groups. When a power difference of the response powers of the user terminal for different antenna groups is greater than a set value, it can be considered that the user terminal is located in a belonging beam area of a beam corresponding to an antenna group with a relatively high power.

When the power difference of the response powers of the user terminal for different antenna groups is less than the set value, it can be considered that the user terminal is located in an intersection area formed by beams respectively corresponding to the different antenna groups.

The data transmission unit 3 is configured to be used by all beams in the physical sector to send common pilot data jointly; and be used by a beam corresponding to a belonging beam area in which the user terminal 7 is located, to send communication data to the user terminal 7, or be used by all beams corresponding to an intersection area in which the user terminal 7 is located, to send communication data jointly to the user terminal 7.

In this embodiment of the present invention, when the base station is to send common pilot data, all beams in the physical sector send common pilot data jointly; specifically, the common pilot data may be sent jointly in an antenna joint sending manner.

Because the user terminal located in the belonging beam area has a corresponding beam, the beam may implement data communication between the user terminal and the base station, that is, the beam corresponding to the user terminal sends communication data to the user terminal. For example, in FIG. 3, a current position of user terminal 201 is in belonging beam area 21, and in this case, the base station sends communication data to user terminal 201 by using a beam of belonging beam area 21; a current position of user terminal 202 is in belonging beam area 22, and the base station sends communication data to user terminal 202 by using a beam of belonging beam area 22; when a current position of user terminal 101 is in intersection area 11, and in this case, the user terminal 101 and two beams of the formed intersection area 11 send communication data jointly. Specifically, the two beams of the formed intersection area 11 may send communication data to user terminal 101 in an antenna joint sending manner.

In a practical application, all beams that cover an intersection area send communication data jointly to a user terminal located in the intersection area, and the used antenna joint sending manner is the same as a sending manner of common pilot data.

The time-frequency resource multiplexing unit 4 is configured to, when communication data is being sent to the user terminal, multiplex a same block of time-frequency resource for user terminals located in different belonging beam areas.

In this embodiment of the present invention, a same block of time-frequency resource in each physical sector may be multiplexed for user terminals located in different belonging beam areas, so as to increase user capacity of the base station. A specific manner of multiplexing a frequency domain resource by the time-frequency resource multiplexing unit may be as follows: It is assumed that user terminal 201 is located in belonging beam area 21 and user terminal 202 is located in belonging beam area 22; after the first layer of a time-frequency resource has been scheduled to user terminal 201 for use, the second layer of the time-frequency resource may further be scheduled to user terminal 202 for use. By multiplexing time-frequency resources, the user capacity of the base station can be increased effectively in this embodiment of the present invention. It should be noted that, in this embodiment of the present invention, when one layer of a time-frequency resource has been scheduled to a user terminal located in an intersection area, another layer of the time-frequency resource is no more scheduled to another user terminal, that is, a time-frequency resource cannot be multiplexed for a user terminal located in an intersection area and another user terminal.

The beam switching unit 5 is configured to perform switching between beams when the user terminal switches between the belonging beam area and the intersection area.

In a practical application, a position of the user terminal 7 is not necessarily unchanged, and the user terminal 7 is likely to move from a belonging beam area to an intersection area because of a movement of a user who uses the user terminal 7. For example, in a process of the movement of the user, the user terminal 7 is likely to move from belonging beam area 21 to intersection area 11, and may further be likely to move from intersection area 11 to belonging beam area 22. In this case, that is, when the user terminal 7 switches between the belonging beam area and the intersection area, communication between the user terminal 7 and the base station may be held by means of beam switching. Because cell handover is unnecessary in the beam switching manner, problems such as call drop or decline of communication quality are not caused.

In this embodiment of the present invention, because in a same physical sector, a same block of time-frequency resource can be multiplexed for user terminals located in different belonging beam areas, user capacity of the physical sector can be increased effectively. In addition, compared with the prior art, a technical solution in this embodiment of the present invention increases user capacity without a need to increase the number of physical sectors, which avoid a defect in the prior art that user capacity is increased by increasing the number of physical sectors, that is, in the prior art, a moving user terminal will perform cell handover frequently, which causes problems such as frequent call drops and decline of a transmission rate of the user terminal during communication.

Still another aspect of embodiments of the present invention further provides a base station, where the base station includes an apparatus for increasing user capacity of a physical sector.

For the apparatus for increasing user capacity of a physical sector, refer to FIG. 4. The apparatus includes:
a determining unit 1, configured to control, according to a communication status between a current base station and a user terminal 7, each unit to perform a corresponding operation, where the communication status includes: before communication data is sent to the user terminal 7, at the time when communication data is being sent to the user terminal 7, and at the time when the user terminal 7 switches between a belonging beam area and an intersection area;
a user terminal correspondence unit 2, configured to, before communication data is sent to the user terminal 7, determine a correspondence between the current user terminal 7 in a physical sector and a belonging beam area or an intersection area, where more than one beam in different directions is provided in the physical sector, the intersection area is an overlapping coverage area of different beams in a same physical sector, and the belonging beam area is an area that is in a coverage area of each beam and is not in an intersection area;
a data transmission unit 3, configured to be used by all beams in the physical sector to send common pilot data jointly; and be used by a beam corresponding to a belonging beam area in which the user terminal 7 is located, to send communication data to the user terminal 7, or be used by all beams corresponding to an intersection area in which the user terminal 7 is located, to send communication data jointly to the user terminal 7;
a time-frequency resource multiplexing unit 4, configured to, when communication data is being sent to a user terminal, multiplex a same block of time-frequency resource for user terminals located in different belonging beam areas; and
a beam switching unit 5, configured to perform switching between beams when the user terminal switches between the belonging beam area and the intersection area.

Because the structure of the apparatus for increasing user capacity of a physical sector in this embodiment is similar to that of the apparatus for increasing user capacity of a physical sector in the embodiment corresponding to FIG. 4, and operating principles as well as beneficial effects are also similar, details are not described herein again.

A person of ordinary skill in the art may understand that all or a part of the steps of the methods in the embodiments may be implemented by a program instructing relevant hardware. The program may be stored in a computer readable storage medium, such as a ROM/RAM, a magnetic disk, or an optical disc.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the presence of additional identical elements in the process, method, article, or device that includes the element.

The foregoing descriptions are merely exemplary embodiments of the present invention, but are not intended to limit the protection scope of the present invention. Any modification, equivalent replacement, or improvement made without departing from the principle of the present invention shall fall within the protection scope of the present claims.

## Claims

1. A method for increasing user capacity of a physical sector, comprising:
determining (S101) a correspondence between a current user terminal in a physical sector and a belonging beam area or an intersection area, wherein more than one beam in different directions is comprised in the physical sector, and the intersection area is an overlapping coverage area of adjacent beams in a same physical sector, wherein the belonging beam area is an area that is in a coverage area of each beam and is not in an intersection area;
sending (S102), jointly by all beams in the physical sector, common pilot data;
sending (S103), jointly by all beams that are corresponding to an intersection area in which the user terminal is located, communication data to the user terminal; multiplexing (S104) a same block of time-frequency resource for user terminals located in different belonging beam areas; and
performing (S105) switching between beams when the user terminal switches between the belonging beam area and the intersection area.

2. The method according to claim 1, wherein that more than one beam in different directions is comprised in each physical sector is specifically that:
the number of beams is two.

3. The method according to claim 1, wherein the determining (S101) a correspondence between a current user terminal in a physical sector and a belonging beam area or an intersection area comprises:
determining, by measuring an uplink sounding reference signal of the user terminal in the physical sector, a belonging beam area or an intersection area corresponding to the user terminal.

4. The method according to claim 1, wherein the multiplexing (S104) a same block of time-frequency resource for user terminals located in different belonging beam areas comprises:
multiplexing different layers of the time-frequency resource for the user terminals belonging to different belonging beam areas.

5. The method according to claim 2, wherein the sending (S103), jointly by all beams that are corresponding to an intersection area in which the user terminal is located, communication data to the user terminal comprises:
sending the communication data jointly in an antenna joint sending manner.

6. The method according to claim 5, wherein the sending the communication data jointly in an antenna joint sending manner is sending the communication data in the same manner as sending the common pilot data.

7. An apparatus for increasing user capacity of a physical sector, comprising:
a determining unit (1), configured to control, according to a communication status between a base station and a user terminal, each unit to perform a corresponding operation, wherein the communication status comprises: before communication data is sent to the user terminal, at the time when communication data is being sent to the user terminal, and belonging beam area at the time when the user terminal switches between a belonging beam area and an intersection area;
a user terminal correspondence unit (2), configured to, before communication data is sent to the user terminal, determine a correspondence between a current user terminal in a physical sector and a belonging beam area or an intersection area, wherein more than one beam in different directions is provided in the physical sector, and the intersection area is an overlapping coverage area of adjacent beams in a same physical sector, wherein the belonging beam area is an area that is in a coverage area of each beam and is not in an intersection area;
a data transmission unit (3), configured to be used by all beams in the physical sector to send common pilot data jointly; and be used by all beams corresponding to an intersection area in which the user terminal is located, to send communication data jointly to the user terminal;
a time-frequency resource multiplexing unit (4), configured to, when communication data is being sent to the user terminal, multiplex a same block of time-frequency resource for user terminals located in different belonging beam areas; and
a beam switching unit (5), configured to perform switching between beams when the user terminal switches between the belonging beam area and the intersection area.

8. The apparatus according to claim 7, wherein the number of beams is two.

9. The apparatus according to claim 8, wherein the user terminal correspondence unit comprises: an uplink sounding reference signal measuring module, configured to determine, by measuring an uplink sounding reference signal of the user terminal in the physical sector, a belonging beam area or an intersection area corresponding to the user terminal.

10. A base station, comprising the apparatus for increasing user capacity of a physical sector according to any one of claims 7 to 9.

## Patentansprüche

1. Verfahren zum Erhöhen der Anwenderkapazität eines physikalischen Sektors, das Folgendes umfasst:
Bestimmen (S101) einer Zuordnung zwischen einem aktuellen Anwenderendgerät in einem physikalischen Sektor und einem zugehörigen Strahlbereich oder einem Überschneidungsbereich, wobei mehr als ein Strahl in unterschiedlichen Richtungen in dem physikalischen Sektor enthalten ist und der Überschneidungsbereich ein überlappender Versorgungsbereich benachbarter Strahlen in demselben physikalischen Sektor ist, wobei der zugehörige Strahlbereich ein Bereich ist, der in einem Abdeckungsbereich jedes Strahls ist und nicht in einem Überschneidungsbereich ist;
gemeinsames Senden (S102) durch alle Strahlen in dem physikalischen Sektor von gemeinsamen Pilotdaten;
gemeinsames Senden (S103) durch alle Strahlen, die einem Überschneidungsbereich entsprechen, in dem sich das Anwenderendgerät befindet, von Kommunikationsdaten zu dem Anwenderendgerät;
Multiplexen (S104) desselben Blocks von Zeit-Frequenz-Betriebsmitteln für Anwenderendgeräte, die sich in unterschiedlichen zugehörigen Strahlgebieten befinden; und
Ausführen (S105) von Umschalten zwischen Strählen, wenn das Anwenderendgerät zwischen dem zugehörigen Strahlbereich und dem Überschneidungsbereich umschaltet.

2. Verfahren nach Anspruch 1, wobei die Tatsache, dass in jedem physikalischen Sektor mehr als ein Strahl in unterschiedlichen Richtungen enthalten ist, insbesondere bedeutet, dass:
die Anzahl der Strahlen zwei ist.

3. Verfahren nach Anspruch 1, wobei das Bestimmen (S101) einer Zuordnung zwischen einem aktuellen Anwenderendgerät in einem physikalischen Sektor und einem zugehörigen Strahlbereich oder einem Überschneidungsbereich Folgendes umfasst:
Bestimmen, durch Messen eines Aufwärtsstreckensondierungsreferenzsignals des Anwenderendgeräts in dem physikalischen Sektor, eines zugehörigen Strahlbereichs oder eines Überschneidungsbereichs, der dem Anwenderendgerät entspricht.

4. Verfahren nach Anspruch 1, wobei das Multiplexen (S104) desselben Blocks der Zeit-Frequenz-Betriebsmittel für Anwenderendgeräte, die sich in unterschiedlichen zugehörigen Strahlbereichen befinden, Folgendes umfasst:
Multiplexen unterschiedlicher Schichten der Zeit-Frequenz-Betriebsmittel für die Anwenderendgeräte, die zu unterschiedlichen zugehörigen Strahlgebieten gehören.

5. Verfahren nach Anspruch 2, wobei das gemeinsame Senden (S103) durch alle Strahlen, die einem Überschneidungsbereich entsprechen, in dem sich das Anwenderendgerät befindet, von Kommunikationsdaten zu dem Anwenderendgerät Folgendes umfasst:
gemeinsames Senden der Kommunikationsdaten auf eine Art des gemeinsamen Sendens der Antennen.

6. Verfahren nach Anspruch 5, wobei das gemeinsame Senden der Kommunikationsdaten auf die Art des gemeinsamen Sendens der Antennen das Senden der Kommunikationsdaten auf dieselbe Weise wie Senden der gemeinsamen Pilotdaten ist.

7. Vorrichtung zum Erhöhen der Anwenderkapazität eines physikalischen Sektors, die Folgendes umfasst:
eine Bestimmungseinheit (1), die konfiguriert ist, gemäß einem Kommunikationsstatus zwischen einer Basisstation und einem Anwenderendgerät jede Einheit zu steuern, eine entsprechende Operation auszuführen, wobei der Kommunikationsstatus Folgendes umfasst: bevor Kommunikationsdaten zu dem Anwenderendgerät gesendet werden, zu der Zeit, wenn die Kommunikationsdaten zu dem Anwenderendgerät gesendet werden, und der zugehörige Strahlbereich zu der Zeit, wenn das Anwenderendgerät zwischen einem zugehörigen Strahlbereich und einem Überschneidungsbereich umschaltet;
eine Anwenderendgerätezuordnungseinheit (2), die konfiguriert ist, bevor Kommunikationsdaten zu dem Anwenderendgerät gesendet werden, eine Zuordnung zwischen einem aktuellen Anwenderendgerät in einem physikalischen Sektor und einem zugehörigen Strahlbereich oder einem Überschneidungsbereich zu bestimmen, wobei mehr als ein Strahl in unterschiedlichen Richtungen in dem physikalischen Sektor bereitgestellt ist und der Überschneidungsbereich ein überlappender Versorgungsbereich benachbarter Strahlen in demselben physikalischen Sektor ist, wobei der zugehörige Strahlbereich ein Bereich ist, der in dem Abdeckungsbereich jedes Strahls ist und nicht in einem Überschneidungsbereich ist;
eine Datenübertragungseinheit (3), die konfiguriert ist, durch alle Strahlen in dem physikalischen Sektor verwendet zu werden, um gemeinsame Pilotdaten gemeinsam zu senden; und durch alle Strahlen, die einem Überschneidungsbereich entsprechen, in dem sich das Anwenderendgerät befindet, verwendet zu werden, um Kommunikationsdaten gemeinsam zu dem Anwenderendgerät zu senden;
eine Zeit-Frequenz-Betriebsmittelmultiplexeinheit (4), die konfiguriert ist, wenn Kommunikationsdaten zu dem Anwenderendgerät gesendet werden, denselben Block der Zeit-Frequenz-Betriebsmittel für Anwenderendgeräte, die sich in unterschiedlichen zugehörigen Strahlbereichen befinden, zu multiplexen; und
eine Strahlumschalteinheit (5), die konfiguriert ist, Umschalten zwischen Strahlen auszuführen, wenn das Anwenderendgerät zwischen dem zugehörigen Strahlbereich und dem Überschneidungsbereich umschaltet.

8. Vorrichtung nach Anspruch 7, wobei die Anzahl der Strahlen zwei ist.

9. Vorrichtung nach Anspruch 8, wobei die Anwenderendgerätezuordnungseinheit Folgendes umfasst: ein Aufwärtsstreckensondierungsreferenzsignalmessmodul, das konfiguriert ist, durch Messen eines Aufwärtsstreckensondierungsreferenzsignals des Anwenderendgeräts in dem physikalischen Sektor einen zugehörigen Strahlbereich oder einen Überschneidungsbereich, der dem Anwenderendgerät entspricht, zu bestimmen.

10. Basisstation, die die Vorrichtung zum Erhöhen der Anwenderkapazität eines physikalischen Sektors nach einem der Ansprüche 7 bis 9 umfasst.

## Revendications

1. Procédé permettant d'augmenter la capacité en utilisateurs d'un secteur physique, le procédé comprenant les étapes consistant à :
déterminer (S101) une correspondance entre un terminal utilisateur actuel dans un secteur physique et une zone de faisceau d'appartenance ou une zone d'intersection, plus d'un faisceau dans des directions différentes étant compris dans le secteur physique, et la zone d'intersection étant une zone de couverture chevauchante de faisceaux adjacents dans un même secteur physique, la zone de faisceau d'appartenance étant une zone qui appartient à une zone de couverture de chaque faisceau et qui n'appartient pas à une zone d'intersection ;
envoyer (S102), conjointement par tous les faisceaux dans le secteur physique, des données pilotes communes ;
envoyer (S103), conjointement par tous les faisceaux qui correspondent à une zone d'intersection dans laquelle le terminal utilisateur se trouve, des données de communication au terminal utilisateur ;
multiplexer (S 104) un même bloc de ressource temps-fréquence pour des terminaux utilisateurs se trouvant dans des zones de faisceau d'appartenance différentes ; et
réaliser (S105) un basculement entre des faisceaux lorsque le terminal utilisateur bascule entre la zone de faisceau d'appartenance et la zone d'intersection.

2. Procédé selon la revendication 1, dans lequel le fait que plus d'un faisceau dans des directions différentes est compris dans chaque secteur physique consiste plus particulièrement en le fait que :
le nombre de faisceaux est de deux.

3. Procédé selon la revendication 1, dans lequel l'étape consistant à déterminer (S101) une correspondance entre un terminal utilisateur actuel dans un secteur physique et une zone de faisceau d'appartenance ou une zone d'intersection comprend l'étape consistant à :
déterminer, en mesurant un signal de référence de sondage montant du terminal utilisateur dans le secteur physique, une zone de faisceau d'appartenance ou une zone d'intersection correspondant au terminal utilisateur.

4. Procédé selon la revendication 1, dans lequel l'étape consistant à multiplexer (S104) un même bloc de ressource temps-fréquence pour des terminaux utilisateurs se trouvant dans des zones de faisceau d'appartenance différentes comprend l'étape consistant à :
multiplexer des couches différentes de la ressource temps-fréquence pour les terminaux utilisateurs appartenant à des zones de faisceau d'appartenance différentes.

5. Procédé selon la revendication 2, dans lequel l'étape consistant à envoyer (S103), conjointement par tous les faisceaux qui correspondent à une zone d'intersection dans laquelle le terminal utilisateur se trouve, des données de communication au terminal utilisateur comprend l'étape consistant à :
envoyer les données de communication conjointement dans un mode d'envoi conjoint d'antenne.

6. Procédé selon la revendication 5, dans lequel l'étape consistant à envoyer les données de communication dans un mode d'envoi conjoint d'antenne consiste à envoyer les données de communication dans le même mode d'envoi que les données pilotes communes.

7. Appareil permettant d'augmenter la capacité en utilisateurs d'un secteur physique, l'appareil comprenant :
une unité de détermination (1), configurée pour commander, selon un état de communication entre une station de base et un terminal utilisateur, à chaque unité de réaliser une opération correspondante, l'état de communication comprenant : préalablement à l'envoi de données de communication au terminal utilisateur, au moment de l'envoi de données de communication au terminal utilisateur, et zone de faisceau d'appartenance au moment du basculement du terminal utilisateur entre une zone de faisceau d'appartenance et une zone d'intersection ;
une unité de correspondance de terminal utilisateur (2), configurée pour, préalablement à l'envoi de données de communication au terminal utilisateur, déterminer une correspondance entre un terminal utilisateur actuel dans un secteur physique et une zone de faisceau d'appartenance ou une zone d'intersection, plus d'un faisceau dans des directions différentes étant présent dans le secteur physique, et la zone d'intersection étant une zone de couverture chevauchante de faisceaux adjacents dans un même secteur physique, la zone de faisceau d'appartenance étant une zone qui appartient à une zone de couverture de chaque faisceau et qui n'appartient pas à une zone d'intersection ;
une unité de transmission de données (3), configurée pour être utilisée par tous les faisceaux dans le secteur physique pour envoyer conjointement des données pilotes communes ; et pour être utilisée par tous les faisceaux qui correspondent à une zone d'intersection dans laquelle le terminal utilisateur se trouve pour envoyer conjointement des données de communication au terminal utilisateur ;
une unité de multiplexage de ressource temps-fréquence (4), configurée pour, au moment de l'envoi de données de communication au terminal utilisateur, multiplexer un même bloc de ressource temps-fréquence pour des terminaux utilisateurs se trouvant dans des zones de faisceau d'appartenance différentes ; et
une unité de basculement entre faisceaux (5), configurée pour réaliser un basculement entre des faisceaux lorsque le terminal utilisateur bascule entre la zone de faisceau d'appartenance et la zone d'intersection.

8. Appareil selon la revendication 7, dans lequel le nombre de faisceaux est de deux.

9. Appareil selon la revendication 8, dans lequel l'unité de correspondance de terminal utilisateur comprend : un module de mesure de signal de référence de sondage montant, configuré pour déterminer, en mesurant un signal de référence de sondage montant du terminal utilisateur dans le secteur physique, une zone de faisceau d'appartenance ou une zone d'intersection correspondant au terminal utilisateur.

10. Station de base, comprenant l'appareil permettant d'augmenter la capacité en utilisateurs d'un secteur physique selon l'une quelconque des revendications 7 à 9.
